# EUROPÄISCHE PATENTSCHRIFT

(11) **EP 1 364 843 B1**
(45) Veröffentlichungstag und Bekanntmachung des Hinweises auf die Patenterteilung: **03.08.2005**
(21) Anmeldenummer: 03009841.2
(22) Anmeldetag: 13.05.2003
(51) Int. Cl.: B60R 21/26

(54) **Gasgenerator für einen Airbag**
Gas generator for an airbag
Générateur de gaz pour un coussin gonflable

(30) Priorität: 21.05.2002 DE 20207861 U
(43) Veröffentlichungstag der Anmeldung: 26.11.2003
(73) Patentinhaber: TRW Airbag Systems GmbH, 84544 Aschau am Inn (DE)
(72) Erfinder: Herrmann, Günter, 83620 Feldkirchen (DE); Ruckdeschel, Rolf, 87645 Schwangau (DE)
(74) Vertreter: Sulzbach, Werner, Dipl.-Chem. Dr.

(56) Entgegenhaltungen:
- EP-A- 0 995 645
- FR-A- 1 118 847
- GB-A- 807 499
- US-A- 5 533 754

## Beschreibung

Die Erfindung betrifft einen Gasgenerator zur Verwendung in einem Fahrzeuginsassenrückhaltesystem, mit einem schlauchförmigen Gehäuse aus einem druckfesten Material und einem in das Gehäuse eingebrachten Treibstoffstrang, wobei der Treibstoffstrang mit einer Hülle versehen ist und zwischen Hülle und Treibstoffstrang ein oder mehrere in axialer Richtung verlaufende Kanäle vorgesehen sind.

Ein derartiger schlauchförmiger Gasgenerator ist bereits aus der DE-A1 100 09 417 bekannt. Die axial verlaufenden Kanäle sind bei dem bekannten Gasgenerator durch einen im Querschnitt kreuzförmigen Treibsatz mit Zentralbohrung gebildet, wobei der Treibsatz von einem Schrumpfschlauch umgeben ist. Der Schrumpfschlauch kann auch zur Verdämmung auf der Außenseite des schlauchförmigen Gehäuses angeordnet sein.

Die EP 0 995 645 A2 beschreibt einen schlauchförmigen Gasgenerator bei dem ein mit radial verlaufenden Fortsätzen versehener Treibstoffstrang in ein schlauchförmiges Gehäuse aus druckfestem Material eingeschoben ist, wobei sich die radialen Fortsätze an die Innenwand des Gehäuses anlegen. Durch die spezielle Geometrie des Treibstoffstrangs entstehen somit zwischen den jeweiligen radialen Fortsätzen in axialer Richtung verlaufende Kanäle zur Weiterleitung der vom Anzünder erzeugten Druckwelle. Um einen möglichst vollständigen Abbrand des Festtreibstoffs sicherzustellen, sind die in das Gehäuse eingebrachten Bohrungen wenigstens teilweise verdämmt.

In der DE-A1 39 32 576 ist ein Gaserzeuger für einen Gasgenerator zum Ausstoßen von Munition oder zum Befüllen von Airbags beschrieben, der einen langsam abbrennenden Festtreibstoff in Schlauch- oder Strangform und eine an einer Längsseite des Festtreibstoffs anliegenden Sprengstoffbeschichtung aufweist. Der Festtreibstoff kann eine hohlzylindrische Form aufweisen, so daß sich im Inneren des Treibstoffstrangs ein axial verlaufender Kanal ausbildet. Die Sprengstoffbeschichtung liegt dann ebenfalls innerhalb dieses Kanals. Alternativ dazu ist vorgesehen, den Festtreibstoff mit einer Hülle zu versehen. In diesem Fall ist der Querschnitt des Festtreibstoffs sternförmig.

Die für die Verwendung in Fahrzeuginsassen-Rückhaltesystemen vorgesehenen Schlauchgasgeneratoren müssen Reaktionszeiten im Bereich von wenigen Millisekunden aufweisen. Hierzu muß ein in kürzester Zeit und vollständig verlaufender Treibstoffabbrand gewährleistet sein. Es ist daher sicherzustellen, daß der Treibstoff über die gesamte Länge des Gasgenerators möglichst gleichzeitig gezündet wird. Die Anzündung erfolgt zumeist über eine von einem Zündelement ausgelöste Gasdruckwelle, die sich längs der in axialer Richtung verlaufenden Kanäle im Schlauchgasgenerator fortpflanzt. Zum Ausgleich von Energieverlusten der Druckwelle und zur Sicherstellung einer gleichmäßigen Anzündung ist der Treibstoff üblicherweise noch mit einer Sprengstoffbeschichtung versehen, die durch die Druckwelle aktiviert wird.

Aufgrund dieses besonderen Anzündmechanismus sind in einem Schlauchgasgenerator, d. h. einem Gasgenerator mit einem Verhältnis von Länge zu Durchmesser von größer als 10, bevorzugt größer als 50, üblicherweise in axialer Richtung verlaufende Kanäle ausgebildet. Zur Ausbildung dieser Kanäle mußte bisher auf komplizierte Treibstoffgeometrien zurückgegriffen werden. Da die Stabilität der Treibstoffgeometrie über die Lebensdauer des Fahrzeugs sichergestellt sein muß, kann auch nicht auf beliebige pyrotechnische Treibsätze zurückgegriffen werden. So wird beispielsweise in der EP-A2 995 645 die Verwendung eines faserverstärkten pyrotechnischen Treibstoffs als vorteilhaft angesehen. Die in der DE 39 32 576 A1 beschriebene Ausführungsform eines hohlzylindrischen Treibstoffstrangs mit innenliegender Sprengstoffbeschichtung ist technisch schwer realisierbar und führt zu unzureichenden Abbrandeigenschaften.

Die Erfindung schafft demgegenüber einen einfach aufgebauten und kostengünstig herstellbaren Schlauchgasgenerator, zu dessen Herstellung auf bekannte Techniken zurückgegriffen werden kann. Erfindungsgemäß wird hierzu ein Gasgenerator zur Verwendung in einem Fahrzeuginsassenrückhaltesystem, mit einem schlauchförmigen Gehäuse aus einem druckfesten Material und einem in das Gehäuse eingebrachten Treibstoffstrang bereitgestellt, wobei der Treibstoffstrang mit einer Hülle versehen ist, und zwischen Hülle und Treibstoffstrang ein oder mehrere in axialer Richtung verlaufende Kanäle vorgesehen sind, und der dadurch gekennzeichnet ist, daß der Treibstoffstrang einen im wesentlichen kreisförmigen, d. h. runden, und die Hülle einen polygonalen Querschnitt aufweist.

Unter Treibstoffsträngen mit im wesentlichen kreisförmigem oder rundem Querschnitt sollen für die Zwecke der Erfindung auch solche zylindrische Treibstoffstränge verstanden werden, die in Abweichung von der Kreisform oval oder an ihrer Längsseite abgeflacht sind.

Die Bereitstellung eines im wesentlichen kreisförmigen Treibstoffstrangs ermöglicht den Rückgriff auf bekannte Extrusionsverfahren, wie sie beispielsweise in der Herstellung von Ein- und Mehrlochpulvern üblich sind. Es können somit auch alle extrudierbaren Treibstoffe verwendet werden. Die Herstellung formstabiler Hüllen mit komplexeren, polygonalen Querschnitten ist dagegen beispielsweise durch Strangpressen geeigneter Materialien ohne größeren technischen Aufwand möglich. Durch das Einpassen eines im wesentlichen kreiszylindrischen Treibstoffstrangs in eine polygonale, bevorzugt dreieckige oder viereckige Hülle ist außerdem die Ausbildung der axial verlaufenden Kanäle zur Weiterleitung der vom Anzünder erzeugten Gasdruckwelle gewährleistet. Andererseits wird durch die Formstabilität des Treibstoffstrangs und der Hülle die Bruchgefahr des Strangs und damit die Gefahr eines Versagens des Anzündmechanismus deutlich verringert.

Zur Erhöhung der Druckfestigkeit kann das schlauchförmige Gehäuse aus mehreren Schichten aufgebaut sein. Bevorzugt weist das Gehäuse eine Innenschicht sowie eine Außenschicht aus Kunststoff sowie eine, über haftvermittelnde Zwischenschichten mit der Innenschicht und der Außenschicht verbundene Mittelschicht aus Aluminium auf. Ein derartiger Schichtaufbau gewährleistet eine besondere Druckfestigkeit bei gleichzeitiger Flexibilität. Eine weitere Möglichkeit besteht in der Bereitstellung eines zweischichtigen Gehäuses mit einer äußeren Kunststoffschicht und einer inneren Aluminiumschicht. In diesem Fall kann die Aluminiumschicht als dünne Metallfolie mit einer Schichtdicke von weniger als 0,1 mm, bevorzugt zwischen 0,08 und 0,1 mm, ausgebildet sein und die Funktion einer Verdämmung übernehmen. Die Aluminiumfolie verschließt dann auch die in das Gehäuse eingebrachten Bohrungen.

Das mehrschichtige Gehäuse ist durch Koextrusion der genannten Materialien herstellbar. Das Verhältnis von Länge zu Durchmesser des Gehäuses beträgt mindestens 10, bevorzugt mindestens 50 und besonders bevorzugt mindestens 100.

Der Treibstoffstrang ist bevorzugt im Querschnitt kreisringförmig, d. h. der Strang ist als Hohlzylinder ausgebildet. Die Herstellung derartiger hohlzylindrischer Festtreibstoffe durch Extrusion ist bereits bekannt und ohne technische Schwierigkeiten möglich. Zur Herstellung des Treibstoffstrangs kann auf bekannte pyrotechnische Festtreibstoffe zurückgegriffen werden, wie sie beispielsweise in der EP-A2 995 645 beschrieben sind. Auch die Verwendung der aus der DE-A1 44 46 976 bekannten Komposittreibstoffe mit einem thermoplastischen Bindemittel, gegebenenfalls einem Weichmacher und einem Oxidator ist möglich. Die Verwendung dieser Komposittreibstoffe ist aufgrund ihrer höheren Elastizität vorteilhaft. Für die Zwecke der Erfindung kann der Treibstoffstrang ferner in Segmente unterteilt sein, die bevorzugt ca. 3 bis 10 cm lang sein können.

Der Treibstoffstrang kann auf wenigstens einer seiner Oberflächen, die an die axial verlaufenden Kanäle zwischen Hülle und Treibstoffstrang angrenzt, mit einer Beschichtung aus einer Anzündmischung versehen sein. Als Anzündmischung ist beispielsweise ein aluminisiertes Gemisch aus Bor und Kaliumnitrat verwendbar. Die Anzündmischung wird durch die vom Zünder erzeugte Gasdruckwelle aktiviert und gewährleistet eine vollständige Anzündung des Treibstoffstrangs über die gesamte Länge des Schlauchgasgenerators. Bevorzugt ist jedoch der Treibstoff selbst durch die Druckwelle hinreichend aktivierbar.

Die den Treibstoffstrang umgebende Hülle weist wenigstens eine Schicht aus einem extrudierbaren Material auf. Dieses Material kann beispielsweise aus Messing, Aluminium, Kunststoff oder Papier ausgewählt sein. Die Hülle ist unter Umgebungsbedingungen formstabil. Sie kann sich jedoch unter Druckeinwirkung ausdehnen und an in das Gehäuse des Schlauchgasgenerators eingebrachte Bohrungen anlegen. Dies führt im Falle der Aktivierung des Gasgenerators zunächst zu einem Druckanstieg im Inneren des Gehäuses und damit zu einem schnelleren und vollständigen Treibstoffabbrand. Bei Überschreitung eines vorbestimmten Innendrucks reißt die Hülle an den Bohrungen auf und die durch den Treibstoff freigesetzten Gase können aus dem Schlauchgasgenerator ausströmen und die Fahrzeuginsassen-Rückhalteeinrichtung, beispielsweise einen aufblasbaren Gassack oder einen Kniefänger, aktivieren.

Der Querschnitt der Hülle ist bevorzugt ein regelmäßiges Polygon, besonders bevorzugt dreieckig oder quadratisch, so daß sich der im wesentlichen kreisrunde Treibstoffstrang unter Ausbildung möglichst kleiner Berührungsflächen und möglichst großer Gaskanäle leicht in die Hülle einschieben läßt. Die Hülle kann zusätzlich mit einer feuchtigkeitsdichten Beschichtung versehen sein, um den Treibstoff vor Umwelteinflüssen zu schützen und die Funktionssicherheit über die gesamte Lebensdauer des Kraftfahrzeugs zu gewährleisten.

Im allgemeinen ist vorteilhaft, wenn der Durchmesser des im wesentlichen kreisrunden Treibstoffstrangs etwa dem kleinsten Innendurchmesser der Hülle entspricht. Damit kann sich der Treibstoffstrang an den Innenflächen der Hülle unter Ausbildung kleiner Berührungsflächen abstützen. Damit wird das Auftreten von Rasselgeräuschen vermieden und die Formstabilität des Treibstoffstrangs erhöht. In gleicher Weise entspricht der größte Durchmesser der Hülle etwa dem kleinsten Innendurchmesser des schlauchförmigen Gehäuses, das in diesem Fall ebenfalls einen in etwa kreisringförmigen Querschnitt aufweisen sollte. Auf diese Weise läßt sich die Hülle sicher im Gehäuse fixieren, ohne die Flexibilität des Schlauchgasgenerators einzuschränken.

Mit der Erfindung wird somit ein einfach aufgebauter Schlauchgasgenerator bereitgestellt, zu dessen Herstellung auf bekannte technische Mittel zurückgegriffen werden kann und der deshalb kostengünstig zu produzieren ist.

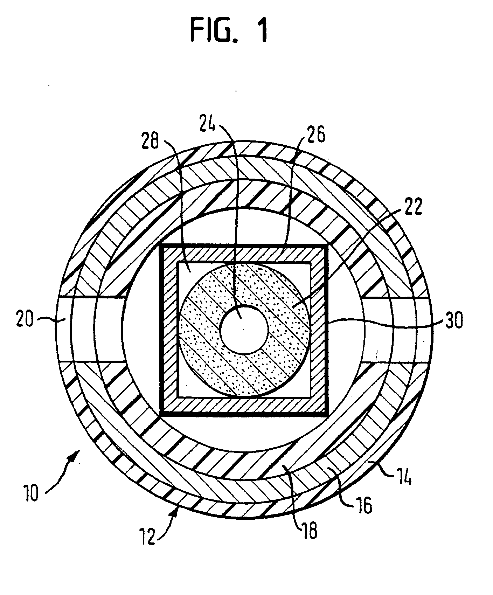

Weitere Merkmale und Vorteile der Erfindung ergeben sich aus der nachfolgenden Beschreibung einer bevorzugten Ausführungsform und der Zeichnung. In der Zeichnung zeigt
- Figur 1 einen Querschnitt durch einen erfindungsgemäßen Schlauchgasgenerator.

Bei der in Figur 1 dargestellten bevorzugten Ausführungsform weist der Schlauchgasgenerator 10 ein schlauchförmiges Gehäuse 12 aus einem druckfesten Material auf, welches hier aus drei Schichten 14, 16, 18 aufgebaut ist. Die äußere Schicht 14 und die innere Schicht 18 sind aus einem extrudierbaren Kunststoff gebildet. Die mit der äußeren Schicht 14 und der inneren Schicht 18 verbundene Mittelschicht 16 besteht vorzugsweise aus Aluminium. Das Gehäuse 12 ist durch Koextrusion der Schichten 14, 16 und 18 hergestellt, wobei zur besseren Verbindung der Schichten ein Haftvermittler eingesetzt werden kann.

In das Gehäuse 12 sind Bohrungen 20 für den Gasauslaß eingebracht. Die Bohrungen können auf ihrer Innenseite mit einer Verdämmung oder Membran (hier nicht gezeigt) versehen sein. An einer der Stirnseiten des Gehäuses 12 ist ein herkömmliches Zündelement (hier nicht gezeigt) angeordnet.

In das Gehäuse 12 ist ein zylindrischer Treibstoffstrang 22 eingebracht. Bei der hier dargestellten Ausführungsform hat der Treibstoffstrang einen kreisringförmigen Querschnitt, d. h. der Strang weist eine Zentralbohrung 24 auf.

Der kreiszylindrische, genauer gesagt hohlkreiszylindrische, Treibstoffstrang 22 ist ferner von einer hier quadratischen Hülle 26 umgeben. Die Hülle kann beispielsweise durch Strangpressen von Messing, Aluminium, Kunststoff oder auch Papier hergestellt werden. Alternativ zu der hier gezeigten Ausführungsform kann die Hülle auch einen dreieckigen oder polygonalen Querschnitt, besonders bevorzugt in Form eines regelmäßigen Polygons, aufweisen. Aufgrund der unterschiedlichen Querschnittsflächen sind in den Ecken des Polygons, bei der hier gezeigten Ausführungsform in den Ecken der im Querschnitt quadratischen Hülle, in axialer Richtung zwischen Hülle und Treibstoffstrang verlaufende Kanäle 28 ausgebildet. Diese Kanäle 28 dienen zur Weiterleitung der von einem Zündelement (hier nicht dargestellt) im Falle der Aktivierung des Gasgenerators erzeugten Gasdruckwelle.

Die Ecken der Hülle 26 stützen sich außerdem an der Innenseite des Gehäuses 12 ab, so daß die Hülle und der Treibstoffstrang sicher in dem Gehäuse 12 fixiert sind.

Falls die Hülle aus einem spröden Kunststoff oder Papier gebildet ist, kann sie auf ihrer Außenseite mit einer feuchtigkeitssperrenden Schicht 30 überzogen sein. Damit bleibt die Funktionsfähigkeit des Treibstoffs über die Lebensdauer des Kraftfahrzeugs erhalten.

Durch die Verwendung eines im wesentlichen kreisringförmigen Querschnitts für den Treibstoffstrang und eines Querschnitts in Form eines regelmäßigen Polygons für die Hülle, wobei der Durchmesser des Treibstoffstrangs im wesentlichen dem kleinsten Innendurchmesser des regelmäßigen Polygons entspricht, ergeben sich äußerst kleine Berührungsflächen zwischen Hülle und Treibstoffstrang, so daß sich der Strang einfach und ohne Bruchgefahr in die Hülle einschieben läßt. Der Strang ist somit sicher in der Hülle fixiert. Damit wird auch das Auftreten von Rasselgeräuschen vermieden. Desweiteren kann der Treibstoffstrang in diesem Fall auch aus ca. 3 bis 10 cm langen Segmenten bestehen.

Die Querschnittsflächen der Hülle und des Treibstoffstrangs sind so aufeinander abgestimmt, daß die in den Ecken des Polygons ausgebildeten Kanäle ein für die Weiterleitung der Gasdruckwelle ausreichend großes Volumen aufweisen. Auf den an die Kanäle 28 angrenzenden Oberflächen kann der Treibstoffstrang zusätzlich mit einer Anzündmischung beschichtet sein, um die bei der Weiterleitung der Gasdruckwelle entstehenden Energieverluste auszugleichen.

Sobald ein im Fahrzeug angeordneter Sensor einen Fahrzeugunfall feststellt, wird über ein elektrisches Signal das an einer Stirnseite des Gasgenerators 10 angeordnete Zündelement aktiviert. Dieses Zündelement erzeugt eine Gasdruckwelle, die den Treibsatzstrang 22 überall an seiner Oberfläche im notwendigen kurzen Millisekundenbereich anzündet. Der beim Anzünden des Treibsatzstranges entstehende Druck führt entweder zu einem Aufreißen der Hülle oder verformt die Hülle 26 so, daß sich die Hülle an die Innenseite des Gehäuses 12 anlegt und bei fortschreitender Druckerhöhung im Bereich der Bohrungen 20 aufreißt. Hierdurch stellt sich ein Gleichgewichtsdruck zwischen der durch den Abbrand des Treibstoffstrangs 22 erzeugten Gasmenge und der durch die Bohrungen 20 abströmenden Gasmasse ein. Die abströmenden Gase aktivieren dann in der benötigten Reaktionszeit von wenigen Millisekunden eine Sicherheitseinrichtung, beispielsweise einen aufblasbaren Gassack, Splitterschutz oder einen Kniefänger.

## Patentansprüche

1. Gasgenerator (10) zur Verwendung in einem Fahrzeuginsassen-Rückhaltesystem, mit einem schlauchförmigen Gehäuse (12) aus einem druckfesten Material und einem in das Gehäuse (12) eingebrachten Treibstoffstrang (22), wobei der Treibstoffstrang (22) mit einer Hülle (26) versehen ist und zwischen Hülle (26) und Treibstoffstrang (22) ein oder mehrere in axialer Richtung verlaufende Kanäle (28) vorgesehen sind, **dadurch gekennzeichnet, daß** der Treibstoffstrang (22) einen runden und die Hülle (26) einen polygonalen Querschnitt aufweist.

2. Gasgenerator (10) nach Anspruch 1, **dadurch gekennzeichnet, daß** das schlauchförmige Gehäuse (12) aus mehreren Schichten aufgebaut ist.

3. Gasgenerator (10) nach Anspruch 1, **dadurch gekennzeichnet, daß** das Gehäuse (12) eine Innenschicht (18) sowie eine Außenschicht (14) aus Kunststoff sowie eine mit der Innenschicht und der Außenschicht verbundene mittlere Schicht (16) aus Aluminium aufweist.

4. Gasgenerator nach Anspruch 1, **dadurch gekennzeichnet, daß** das Gehäuse eine Außenschicht aus Kunststoff und eine Innenschicht aus Aluminium aufweist.

5. Gasgenerator (10) nach einem der vorhergehenden Ansprüche, **dadurch gekennzeichnet, daß** der Treibstoffstrang (22) im Querschnitt kreisringförmig ist.

6. Gasgenerator (10) nach einem der vorhergehenden Ansprüche, **dadurch gekennzeichnet, daß** der Treibstoffstrang (22) auf wenigstens einer seiner Oberflächen mit einer Beschichtung aus einer Anzündmischung versehen ist.

7. Gasgenerator (10) nach Anspruch 6, **dadurch gekennzeichnet, daß** die Anzündmischung ein aluminisiertes Gemisch aus Bor und Kaliumnitrat ist.

8. Gasgenerator (10) nach einem der vorhergehenden Ansprüche, **dadurch gekennzeichnet, daß** die Hülle (26) wenigstens eine Schicht aus einem extrudierbaren Material aufweist.

9. Gasgenerator (10) nach Anspruch 8, **dadurch gekennzeichnet, daß** das extrudierbare Material aus Messing, Aluminium, Kunstoff oder Papier ausgewählt ist.

10. Gasgenerator (10) nach einem der vorhergehenden Ansprüche, **dadurch gekennzeichnet, daß** das Gehäuse (12) mit Bohrungen (20) versehen und die Hülle (26) unter Druckeinwirkung dehnbar ist und sich an die Bohrungen (20) im Gehäuse (12) anlegt.

11. Gasgenerator (10) nach einem der vorhergehenden Ansprüche, **dadurch gekennzeichnet, daß** der Querschnitt der Hülle (26) dreieckig oder quadratisch ist.

12. Gasgenerator (10) nach einem der vorhergehenden Ansprüche, **dadurch gekennzeichnet, daß** die Hülle mit einer feuchtigkeitsdichten Beschichtung (30) versehen ist.

13. Gasgenerator (10) nach einem der vorhergehenden Ansprüche, **dadurch gekennzeichnet, daß** der Durchmesser des Treibstoffstrangs (22) etwa dem kleinsten Innendurchmesser der Hülle (26) entspricht.

14. Gasgenerator (10) nach einem der vorhergehenden Ansprüche, **dadurch gekennzeichnet, daß** der größte Durchmesser der Hülle (26) etwa dem kleinsten Innendurchmesser des schlauchförmigen Gehäuses (12) entspricht.

## Claims

1. A gas generator (10) for use in a vehicle occupant restraint system, comprising a tubular housing (12) of a pressure-resistant material and a propellant strand (22) incorporated in the housing (12), the propellant strand (22) being provided with an envelope (26) and one or more axially extending passages (28) being provided between the envelope (26) and the propellant strand (22), **characterized in that** the propellant strand (22) has a round cross-section and the envelope (26) has a polygonal cross-section.

2. The gas generator (10) as claimed in claim 1, **characterized in that** the tubular housing (12) is made up of a plurality of layers.

3. The gas generator (10) as claimed in claim 1, **characterized in that** the housing (12) has an inner layer (18) as well as an outer layer (14) of plastic material as well as a middle layer (16) of aluminum connected with the inner and outer layers.

4. The gas generator as claimed in claim 1, **characterized in that** the housing has an outer layer of plastic material and an inner layer of aluminum.

5. The gas generator (10) as claimed in any of the preceding claims, **characterized in that** the propellant strand (22) has a cross-section in the shape of a circular ring.

6. The gas generator (10) as claimed in any of the preceding claims, **characterized in that** on at least one of its surfaces the propellant strand (22) is provided with a coating of an ignition mixture.

7. The gas generator (10) as claimed in claim 6, **characterized in that** the ignition mixture is an aluminized mixture of boron and potassium nitrate.

8. The gas generator (10) as claimed in any of the preceding claims, **characterized in that** the envelope (26) has at least one layer of an extrudable material.

9. The gas generator (10) as claimed in claim 8, **characterized in that** the extrudable material is selected from brass, aluminum, plastics or paper.

10. The gas generator (10) as claimed in any of the preceding claims, **characterized in that** the housing (12) is provided with bores (20) and the envelope (26) is expandable under the influence of pressure and rests against the bores (20) in the housing (12).

11. The gas generator (10) as claimed in any of the preceding claims, **characterized in that** the cross-section of the envelope (26) is triangular or square.

12. The gas generator (10) as claimed in any of the preceding claims, **characterized in that** the envelope is provided with a moisture-proof coating (30).

13. The gas generator (10) as claimed in any of the preceding claims, **characterized in that** the diameter of the propellant strand (22) corresponds approximately to the smallest inside diameter of the envelope (26).

14. The gas generator (10) as claimed in any of the preceding claims, **characterized in that** the largest diameter of the envelope (26) corresponds approximately to the smallest inside diameter of the tubular housing (12).

## Revendications

1. Générateur de gaz (10) destiné à être utilisé dans un système de retenue de passager de véhicule, comportant un boîtier en forme de tube (12) en un matériau résistant à la pression et un boyau de combustible (22) introduit dans le boîtier (12), le boyau de combustible (22) étant pourvu d'une enveloppe (26), et un ou plusieurs canaux (28) s'étendant en direction axiale étant prévus entre l'enveloppe (26) et le boyau de combustible (22), **caractérisé en ce que** le boyau de combustible (22) présente une section transversale ronde et l'enveloppe (26) présente une section transversale polygonale.

2. Générateur de gaz (10) selon la revendication 1, **caractérisé en ce que** le boîtier en forme de tube (12) est constitué par plusieurs couches.

3. Générateur de gaz (10) selon la revendication 1, **caractérisé en ce que** le boîtier (12) présente une couche intérieure (18) ainsi qu'une couche extérieure (14) en matière plastique ainsi qu'une couche médiane (16) en aluminium reliée à la couche intérieure et à la couche extérieure.

4. Générateur de gaz selon la revendication 1, **caractérisé en ce que** le boîtier présente une couche extérieure en matière plastique et une couche intérieure en aluminium.

5. Générateur de gaz (10) selon l'une des revendications précédentes, **caractérisé en ce que** le boyau de combustible (22) a une section transversale de forme circulaire.

6. Générateur de gaz (10) selon l'une des revendications précédentes, **caractérisé en ce que** le boyau de combustible (22) est pourvu d'un revêtement en un mélange d'allumage sur au moins une de ses surfaces.

7. Générateur de gaz (10) selon la revendication 6, **caractérisé en ce que** le mélange d'allumage est un mélange aluminisé de bore et de nitrate de potassium.

8. Générateur de gaz (10) selon l'une des revendications précédentes, **caractérisé en ce que** l'enveloppe (26) présente au moins une couche en matériau apte à être extrudé.

9. Générateur de gaz (10) selon la revendication 8, **caractérisé en ce que** le matériau apte à être extrudé est choisi parmi le laiton, l'aluminium, la matière plastique ou le papier.

10. Générateur de gaz (10) selon l'une des revendications précédentes, **caractérisé en ce que** le boîtier (12) est pourvu de perçages (20) et l'enveloppe (26) est extensible sous l'effet de la pression et s'applique contre les perçages (20) dans le boîtier (12).

11. Générateur de gaz (10) selon l'une des revendications précédentes, **caractérisé en ce que** la section transversale de l'enveloppe (26) est triangulaire ou carrée.

12. Générateur de gaz (10) selon l'une des revendications précédentes, **caractérisé en ce que** l'enveloppe est pourvue d'un revêtement (30) étanche à l'humidité.

13. Générateur de gaz (10) selon l'une des revendications précédentes, **caractérisé en ce que** le diamètre du boyau de combustible (22) correspond approximativement au plus petit diamètre intérieur de l'enveloppe (26).

14. Générateur de gaz (10) selon l'une des revendications précédentes, **caractérisé en ce que** le plus grand diamètre de l'enveloppe (26) correspond approximativement au plus petit diamètre intérieur du boîtier (12) en forme de tube.
